(19) Europäisches Patentamt
European Patent Office
Office européen des brevets

(11) Publication number: 0 060 673 B1

(12) **EUROPEAN PATENT SPECIFICATION**

(45) Date of publication of patent specification: **05.03.86**

(51) Int. Cl.$^4$: **C 08 L 23/02,** C 08 L 71/02, C 08 K 5/13

(21) Application number: **82301209.1**

(22) Date of filing: **09.03.82**

(54) **Extrudable film-forming compositions of Ziegler-Natta catalyzed olefin polymers including anti-gel and anti-block components.**

(30) Priority: **11.03.81 US 242457**

(43) Date of publication of application: **22.09.82 Bulletin 82/38**

(45) Publication of the grant of the patent: **05.03.86 Bulletin 86/10**

(84) Designated Contracting States: **BE DE FR GB IT SE**

(56) References cited:
**BE-A- 620 180**
**CA-A- 961 998**
**FR-A-1 235 862**
**FR-A-2 292 736**
**US-A-4 013 622**

**The file contains technical information submitted after the application was filed and not included in this specification**

(73) Proprietor: **UNION CARBIDE CORPORATION**
**39 Old Ridgebury Road**
**Danbury Connecticut 06817 (US)**

(72) Inventor: **Corwin, Michael Allen**
**194 Old Forge Road**
**Millington 07946 (US)**
Inventor: **Foster, George Norris**
**250-0 Turkey Hill Road**
**Bloomsbury New Jersey 08804 (US)**

(74) Representative: **Baverstock, Michael George Douglas et al**
**BOULT, WADE & TENNANT 27 Furnival Street**
**London, EC4A 1PQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 060 673 B1

**Description**

This invention relates to anti-gel and anti-block components useful for reducing optical degradation phenomena and discoloration in extruded film.

Olefin polymers such as polyethylene have been used for a number of years for the preparation of films by extrusion processes. Unlike high pressure, free radical polymerized polyethylenes, low pressure, low density polyethylenes prepared in the presence of Ziegler-Natta catalysts frequently develop gel-like defects when extruded, e.g., when extruded as blown films. In a blown film process, polyethylene pellets or granules are melted and extruded from an annular die to form a film envelope. In the extruder and die system, there are typically "dead spots" or "hangup areas" where molten polyethylene does not move rapidly, resulting in long heat histories for portions of the melt. As portions of the polymer are flushed from these hangup areas, they cause optical degradation phenomena in the film, known as "pinstriping" and "gel streaking".

By "pinstriping" is meant haze bands resulting from accumulations of micro-gels which are aligned in the machine direction during the film forming process. By "gel-streaking" is meant surface roughness in the form of the inclusion, either singularly or in rows, of "v-shaped" gels ("arrowheads" or "chevrons"), streaks of soft gels, or, in extreme cases, film texture completely permeated by soft gels. Such optical degradation phenomena not only detract from film optical and mechanical strength properties, but also can cause severe problems with respect to maintaining bubble geometry during the film forming process.

Because of the fact that the extrusion processes usually involve the use of relatively high extrusion temperatures and prolonged extrusion times, in commercial practice, various anti-oxidants, such as hindered phenolics, are admixed with the olefin polymer, to prevent undesirable degradation of the polymer during the preparation of the film. When such antioxidants are used, however, with the film forming grades of olefin polymers in certain types of extrusion equipment, the antioxidants appear to pronounce, if not create, gel-streaking and pinstriping in the products thus formed.

Blocking of olefin polymer films is a well known phenomena. By blocking is meant the tendency of films or sheets to stick or adhere to each other or to other surfaces whenever adhesion is undesirable. Various anti-block agents are commonly incorporated into film forming polymers or applied to film surfaces to reduce blocking. For example, stearamide, stearoguanamine, metal salts of fatty acids such as calcium stearate; sodium dioctylsulfosuccinate; finely divided silica or calcium carbonate; alkylamines and alkyl quaternary ammonium compounds are anti-block agents which have been incorporated into the film forming polymer before extrusion.

Many solutions have been proposed to eliminate gel streaking and pinstriping. For example, it is known to physically remove the chloride catalyst residue, prior to extrusion, by leaching the reaction product of polymer and chloride catalyst residue with alcohols, aqueous acid, water, or treating the polymer and catalyst with propylene oxide followed by an alcohol or water wash and the like. Such treatments usually produce white polymers initially, but a yellow or tan color returns when the polymers are subjected to molding and/or heating operations. In order to avoid this undesirable color formation, it is usually necessary to use a second or even a third clean-up procedure requiring the use of large quantities of deactivating materials. Another practice in the art involves drying the after-treated polymer prior to fabrication. Because they usually must be repeated several times in order to obtain a polymer having acceptable color upon exposure to heat, such cleanup procedures are both expensive and time consuming. Illustrative of such prior art treatments are those disclosed in U.S. patents 3,925,341; 3,962,199; 3,247,351; 4,029,877; 4,117,219; 3,299,027; 3,923,760; 3,308,105; and 4,098,990.

Other treatments disclosed in the prior art involve the addition of compounds to the polymer prior to fabrication in order to complex with the harmful components in the chloride catalyst residue and deactivate them. Illustrative of these prior art treatments are those disclosed in Canadian patent 961,998, U.S. patent 4,013,622 and in U.S. patent 3,773,743.

U.S. patent 3,773,743 discloses a method for improving the stability and color of olefin polymers by deactivating their Ziegler-Natta chloride catalyst residues. This method involves high temperature (190°C—250°C) processing with hydroxyl compounds ($H_2O$ and primary alcohols) and with an organic base such as an alkyl amine; aryl amine; Li, Ca and Zn salts of carboxylic acids; trialkyl phosphites; and metal alkoxides. The concentration disclosed for the hydroxy source is the range of 0.5 to 1.5 weight percent and a concentration of 50 to 2500 parts per million (ppm) is disclosed for the organic base. At the processing temperatures disclosed, some of the organic bases and the hydroxy sources would be volatile and cause foaming of the product if the processing were not done in a way to remove volatiles, e.g., as in devolatilizing extruders.

CA—A—961,998 and US—A—4,013,622 disclose the addition of polyalkylene glycol having a molecular weight between 100 and 20,000 to film grade olefin polymers to prevent gel streaking during film extrusion processes. In commercial practice, however, it has been found that extruded film made according to CA—A—961,998 subsequently discolors in a few weeks even at ambient temperatures, i.e., it turns a yellowish color which is, of course, undesirable. The man skilled in the art knows that the anti-block compound used in CA—A—961998 was a "Super Floss" having a pH greater than 8.

The primary cause for discoloration in extruded films or molded articles is generally recognized as related to the presence of hindered phenolic anti-oxidants. Discoloration generally is believed to result

from the reaction or breakdown products of such anti-oxidants. Exposure of these anti-oxidant stabilized compositions to air pollution in the form of oxides of nitrogen can promote discoloration. Thermal abuse in processing, especially in the presence of prodegradants, can lead to the build-up of chromophoric quinoid structures from break-down of the hindered phenolic anti-oxidants.

Prodegradants can be additives used to control surface slip or release properties, anti-static properties, and gel streaking tendencies. For example, prodegradants act to provide hydroperoxides to accelerate auto-oxidation. Polyethylene glycols used to control gel streaking and unsaturated fatty amides used for slip control can act with thermal abuse as prodegradants. Trace metals from inorganic anti-blocks or fillers can act as reduction-oxidation catalysts to accelerate hydroperoxide decomposition, especially at low temperatures where the peroxide decomposition is the rate limiting step. At such low temperatures, normally volatile, anti-oxidant reaction or break-down products can accumulate, promoting discoloration. Moreover, inorganic additives or fillers such as finely divided silica with iron contamination can interact with the hindered phenolic anti-oxidant to form chromophoric, phenolate species.

It has now been found that reduced discoloration can be achieved by using an anti-block compound having a pH of between 6 and 8.

The present invention seeks to provide an extrudable, film forming composition comprising a Ziegler-Natta catalyzed olefin polymer and an extruded film made from such extrudable composition, which film is free from gel streaking and pinstriping.

The present invention also seeks to provide a process wherein a film forming composition containing a Ziegler-Natta catalyzed olefin polymer may be extruded without optical degradation phenomenon appearing within the extruded film or film discoloration occurring subsequently.

The present invention further seeks to provide an anti-gel and an inorganic anti-block compound which, when added to a Ziegler-Natta catalyzed olefin polymer, is useful in removing or reacting with the chloride catalyst residue in the olefin polymer to prevent gel streaking or pinstriping from occurring in a subsequent extrusion process, as well as preventing discoloration from occurring upon aging of the extruded film.

The present invention additionally seeks to provide an improved process for extruding tubular olefin polymer film.

The present invention still further seeks to provide a materbatch concentrate which can be admixed with a Ziegler-Natta catalyzed olefin polymer to provide the extrudable film forming composition of this invention.

This invention is based on the discovery that an optical degradation phenomenon, known as gel streaking and pinstriping, present in extruded Ziegler-Natta catalyzed olefin polymer, can be substantially prevented through the addition of small amounts of an anti-gel compound of low volatility. In addition, when extrusion is also carried out in the presence of an inorganic anti-block compound having a substantially neutral pH, i.e., between 6 and 8, film sticking or tackiness is prevented without leading to discoloration of the film upon aging. The anti-gel compound is characterized by having a chain of at least 5 repeat units of an alkylene oxide and by having a molecular weight between $3.32\times10^{-25}$ and $6.64\times10^{-21}$ kg (200 and 4,000,000 Daltons). According to the present invention, the incidence of gel streaking or pinstriping in the film during the extrusion of a Ziegler-Natta catalyzed olefin polymer and discoloration of the extruded film upon aging are both minimized through the use of a composition comprising:

a majority of a Ziegler-Natta catalyzed olefin polymer; and

a minor amount of at least one hindered phenolic anti-oxidant, an inorganic anti-block compound and an anti-gel compound as defined herein.

This invention also relates to an improved method of extruding a Ziegler-Natta catalyzed olefin polymer which comprises extruding a film forming composition containing a Ziegler-Natta catalyzed olefin polymer and minor amounts of at least one hindered phenolic anti-oxidant, an inorganic anti-block compound and an anti-gel compound as defined herein.

Moreover, this invention relates to a masterbatch concentrate which may be admixed with a Ziegler-Natta catalyzed olefin polymer to yield the film forming composition of this invention.

In one aspect, the present invention relates to an extrudable film forming composition which, when extruded, forms film essentially devoid of gel streaking and pinstriping and which does not discolor upon aging at 60°C for 4 weeks. The film forming composition is comprised of at least one olefin polymer containing a chloride catalyst residue, at least one hindered phenolic anti-oxidant, an inorganic anti-block compound having a substantially neutral pH, and an anti-gel compound characterized by having at least 5 repeat units of an alkylene oxide. The anti-gel compound is present in a concentration sufficient to neutralize the chloride catalyst residue in the composition. The concentration of anti-gel compound is at least 0.8 times the concentration of the anti-oxidant.

The residues of Ziegler-Natta catalysts include trace amounts of magnesium, titanium, aluminum and chlorine. By chloride residues, as used herein, is meant the chlorides of magnesium, titanium and aluminum present in a Ziegler-Natta catalyst residue. Chloride catalyst residue concentrations between 5 and 50 ppm are typical for ethylene polymers and chloride catalyst residue concentrations between 10 and 500 ppm are typical for propylene polymers and butene polymers made with Ziegler-Natta catalysts.

Anti-oxidants in a concentration of 20 to 500 ppm are typically added to ethylene polymer compositions. According to the present invention, the anti-gel compound is present in a concentration of

25 to 10,000 ppm for polyethylene resin compositions. And concentrations of 200 to 5000 ppm of anti-oxidant are typically added to propylene polymer or butene polymer compositions. Concentrations of anti-gel compound of 200 to 10,000 are added to propylene polymer or butene polymer composition.

Inorganic anti-block compounds in a concentration of 500 to 5% by weight are typically added to olefin polymer compositions.

In another aspect, the present invention relates to a process for extruding a film forming olefin polymer based composition into film. The film is essentially free from gel streaking and pinstriping and does not discolor upon aging at 60°C for 4 weeks. Prior art polymer based compositions comprised a Ziegler-Natta catalyzed film grade olefin polymer which contained at least one anti-oxidant having a concentration between 20 and 5000 ppm, and an inorganic anti-block compound having a concentration between 500 ppm and 5% by weight. The prior art inorganic anti-block typically had a pH above 8. The aforementioned prior art polymer based compositions were susceptible to gel streaking and pinstriping during formation of the film. It also has been discovered that when inorganic anti-block compounds having a pH below 6 or above 8 were present in the aforementioned prior art compositions, film that was formed discolored after aging a few weeks at 60°C or months at ambient temperature.

In still another aspect, the present invention relates to a masterbatch concentrate which, when admixed with a Ziegler-Natta catalyzed olefin polymer in proportions defined herein, provides a film forming composition capable of being extruded into a film which is essentially free from gel streaking and pinstriping and which does not discolor upon aging at 60°C for 4 weeks.

This invention is based upon the discovery that such prior art compositions and prior art extrusion processes may be improved by extruding a Ziegler-Natta catalyzed olefin polymer based composition into film in the presence of a hindered phenolic anti-oxidant, an anti-block compound having a substantially neutral pH, and an anti-gel compound characterized by containing at least 5 repeat units of an alkylene oxide. Preferably, the anti-gel compound is characterized by having more than 10 repeat units of an alkylene oxide. The anti-gel compound typically is present in a concentration between 25 and 10,000 ppm, based upon the weight of the polymer and has a molecular weight between $3.32\times10^{-25}$ and $6.64\times10^{-21}$ kg (200 and 4,000,000 Daltons).

The hindered phenolic anti-oxidant, inorganic antiblock compound and anti-gel compound are uniformly dispersed in the olefin polymer based extrudable composition. The dispersion can be effected by various dispersion techniques commonly employed by those skilled in the art of preparing extrudable composition. The three aforementioned additives could be directly introduced into the olefin polymer (e.g., polyethylene) via a V-type blender or by mixing via a Henschel type intensive mixer. The three aforementioned additives also could be directly hot compounded into the olefin polymer or made into a masterbatch for final letdown using conventional hot processing equipment such as a Banbury mixer, a Werner Pfleiderer twin screw mixing extruder or a single screw mixer extruder that has pellatization equipment on the head of the extruder.

The anti-gel compound

The anti-gel compound of this invention may be represented by the following structural formula: $R-(A-R_1)_n$, wherein

R is a hydroxyl group; a hydroxy $C_1-C_{24}$ alkyl group; a $C_1-C_{12}$ alkylated phenol group; a $C_{12}-C_{24}$ alkyl or alkylene amine group; or a $C_{12}-C_{24}$ alkyl or alkylene amide group;

n is 1 or 2;

$R_1$ is a hydrogen atom or lower alkyl group;

A is $-(R_2O)_x-$ or

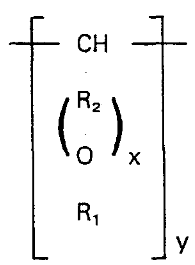

wherein

$R_2$ is an ethylene or propylene group or mixtures thereof;

x is a number between 5 and 20,000; and

y is a number between 2 and 6; and

$R_1$ is as defined hereinabove.

These anti-gel compounds are of low volatility and have a molecular weight in the range of $3.32\times10^{-25}$ to $6.64\times10^{-21}$ kg (200 to 4,000,000 Daltons), preferably in the range of from $1.33\times10^{-24}$ to $3.32\times10^{-22}$ kg (800 to 200,000 Daltons). Below a molecular weight of $3.32\times10^{-25}$ kg (200 Daltons), volatility is high and causes smoking and equipment plate-out problems. Above a molecular weight of $6.64\times10^{-21}$ kg (4,000,000 Daltons) and depending upon the molecular weight of the polymer, poor dispersion of the anti-gel compound may occur causing gel-like defects to result in the film.

Suitable anti-gel compounds according to the present invention include:

low molecular weight oligomers up to high molecular weight polymers such as polyalkylene glycols having a molecular weight greater than $3.32\times10^{-25}$ kg (200 Daltons) and less than $3.32\times10^{-23}$ kg (20,000 Daltons), and polyalkylene oxides having a molecular weight greater than $3.32\times10^{-23}$ kg (20,000 Daltons) and less than $6.64\times10^{-21}$ kg (4,000,000 Daltons);

the reaction product of an alkanol with more than 5 moles of an alkylene oxide such as ethylene or propylene oxide adducts of lauryl alcohol, myristyl alcohol, palmityl alcohol, stearyl alcohol, arachidyl alcohol, behenyl alcohol, oleyl alcohol and erucyl alcohol, and mixtures thereof; and

the reaction product of an alkyl phenol such as methyl, ethyl, propyl, butyl, pentyl, hexyl, heptyl, octyl, nonyl, decyl, undecyl, or dodecyl phenol with more than 5 moles of an alkylene oxide such as ethylene or propylene oxide, and mixtures thereof.

Other anti-gel compounds considered suitable according to the present invention include:

the reaction product of a $C_{12}$—$C_{24}$ alkyl amine or amide such as lauryl, myristyl, palmytyl, stearyl, arachidyl, and behenyl amine or amide, respectively, with more than 5 moles of an alkylene oxide such as ethylene or propylene oxide, and mixtures thereof;

the reaction product of a $C_{12}$—$C_{24}$ alkylene amine or amide such as oleyl and erucyl amine or amide with more than 5 moles of an alkylene oxide such as ethylene or propylene oxide, and mixtures thereof; and

the reaction product of polyols or monoalkyl substituted polyols such as glycerol, mannitol, or sorbitol with more than 5 moles of an alkylene oxide such as ethylene oxide or propylene oxide, and mixtures thereof. Preferably the anti-gel compound to chloride catalyst ratio is at least 5:1, desirably greater than 10:1.

Olefin polymers

The extrudable olefin polymers employed in the extrudable compositions of the present invention are normally solids materials, that is, solid at room temperature. Any extrusion grade olefin polymer can be used in the compositions of the present invention. The term "olefin polymer" thus includes homopolymers of the olefins, as well as interpolymers of one or more olefins with each other, and/or up to 30 weight percent of one or more monomers which are copolymerizable with such olefins. The olefins such as ethylene, propylene, butene-1, isobutylene, pentene-1, 4-methyl-pentene-1, hexene-1, octene-1, nonene-1, decene-1, as well as interpolymers of one or more of such olefins and one or more other monomers which are interpolymerizable with such olefins, such as other vinyl and diene compounds, i.e., those having the group

$$\overset{|}{—C}=\overset{|}{C—}.$$

Preferred copolymers are the ethylene copolymers such as ethylene/propylene copolymers, ethylene/butene-1 copolymers, ethylene/pentene-1 copolymers, ethylene/4-methyl-pentene-1 copolymers, ethylene/hexene-1 copolymers, or ethylene/octene-1 copolymers. Preferred ethylene interpolymers include two or more of the following: propylene, butene-1, pentene-1, hexene-1, 4-methyl-pentene-1 and octene-1. Preferred propylene interpolymers include two or more of the following monomers: ethylene, butene-1, pentene-1, hexene-1, 4-methyl-pentene-1 and octene-1. Preferred butene-1 interpolymers include two or more of the following monomers: ethylene, propylene, hexene-1, 4-methyl-pentene-1 and octene-1.

Also included in the term polymer are blends of one polymer with one or more other polymer. Illustrative of such blends are ethylene polymers with one or more of the following: polypropylene, high pressure, low density polyethylene, high density polyethylene, polybutene-1, and polar monomer containing olefin copolymers such as ethylene/acrylic acid copolymers, ethylene/methyl acrylate copolymer, ethylene/ethylacrylate copolymer, ethylene/vinyl acetate copolymer, ethylene/acrylic acid/ethyl acrylate terpolymer, and ethylene/acrylic acid/vinyl acetate terpolymer.

Also included within the term polar monomer containing olefin copolymers are the metallic salts of those olefin copolymers, or blends thereof, which contain free carboxylic acid groups. Illustrative of such polymers are ethylene/acrylic acid copolymer, ethylene/methacrylic acid copolymer, propylene/acrylic acid copolymer, butene/acrylic acid copolymer, and an oxidized olefin polymer.

Illustrative of the metals which can be used to provide the salts of said carboxylic acid polymers are the one, two and three valence metals, such as sodium, lithium, potassium, calcium, magnesium, aluminum, barium, zinc, zirconium, beryllium, iron, nickel and cobalt.

The preferred olefin polymers for use in the present invention are polymers of ethylene and the most preferred polymers are those having a melt index of from 0.017 to 1.67 mg/sec (0.1 to 10 decigrams per 10 minutes), a density of from 0.910 to 0.955 kg/dm$^3$. Low density ethylene polymer has a density of between 0.910 and 0.925 kg/dm$^3$, medium density ethylene polymer has a density of between 0.925 and 0.940 kg/dm$^3$, and high density ethylene polymer has a density of between 0.940 and 0.970 kg/dm$^3$. Thus, the low density ethylene polymers are the most preferred olefin polymers to be used in the present invention, although the medium and high density polymers also may be used.

Preferred low pressure, low density ethylene copolymers for use in the present invention include those which may be produced in accordance with the procedures set forth in EP—A—4645 and EP—A—4647.

Other low pressure, low density ethylene hydrocarbon polymers preferred for use in the present invention are those which may be prepared as described in U.S.—A—4,011,382, entitled "Preparation of Low and Medium Density Ethylene Polymer in Fluid Bed Reactor" by I. J. Levine et al.

When an ethylene polymer is used, it is preferred that the chloride catalyst residue concentration be between 5 and 50 ppm, and that the concentration of anti-gel compound be between 25 and 10,000 ppm. For a propylene or butene polymer these ranges are 10 to 500 ppm and 200 to 10,000 ppm, respectively, with a preferred anti-oxidant concentration of between 200 and 5000 ppm.

The olefin polymers may be used in the form of powders, pellets, granules, or any other form that can be fed to an extruder.

The anti-oxidants

As noted above, the extrudable compositions of the present invention contain at least one anti-oxidant for the olefin polymer. These anti-oxidants are present in stabilizingly effective quantities. Such amounts are from 0.002 to 0.5, and preferably from 0.01 to 0.05, percent by weight, based on the weight of the olefin polymer. The anti-oxidant stabilizers which may be employed in the compositions of the present invention include all those polyolefin anti-oxidants commonly employed in olefin polymer based film extrusion compositions. These materials are such as are capable of providing anti-oxidant protection at processing temperatures of the order of from 135°C to 340°C or higher.

Such anti-oxidant stabilizers include hindered phenols, such as p - hydroxyphenylcyclohexane; di - p - hydroxyphenylcyclohexane dicresylolpropane; tertiary butyl para cresol; 2,6 - di - tert - butyl - p - cresol; 2,4,6 - tri - tert - butylphenol; octadecyl - 3 - (3',5' - di - tert - butyl - 4' - hydroxyphenol)propionate; tetra bis[methylene 3 - (3',5' - di - tert - butyl - 4' - hydroxyphenyl)propionate]methane; 1,3,5 - trimethyl - 2,4,6 - tris(3,5 - di - tert - butyl - 4 - hydroxybenzyl)benzene; tris(3,5 - di - tert - butyl - 4 - hydroxybenzyl)isocyanate; 1,3,5 - tris(4 - tert - butyl - 3 - hydroxy - 2,6 dimethyl benzyl) - 1,3,5 - triazine - 2,4,6 - (1H,3H,5H) - trione; and bis - [3,3 - bis - 4' - hydroxy - 3' - tert - butyl - phenyl) - butanoic acid] - glycol ester; condensation products of dialkylphenols with formaldehyde; reaction products of phenol with styrene, 1,1' - methylene - bis(4 - hydroxy - 3,5 - tert - butyl - phenol), 2,2' - methylene - bis - (4 - methyl - 6 - tert - butylphenol), 2,6 - (2 - tert - butyl - 4 - methyl - 6 - methylphenol) - p - cresol, phenylethylpyrocatechol, phenolisopropylpyrocatechol, 1,1,3 - tris(2' - methyl - 3' - t - butyl - 4 - hydroxy phenol)butane, 2,2 - methylene - bis[6 - (α - methylcyclohexyl) - 4 - methylphenol], 1,3,5 - trimethyl - 2,4,6 - tris - (3',5' - di - t - butyl - 4 - hydroxybenzyl)benzene and α - napthol; and sulfur containing compounds such as 2,2' - thio - bis - (4 - methyl - 6 - tert - butylphenol), 4,4 - thio - bis(3 - methyl - 6 - tert - butylphenyl), distearyl thiodipropionate and dilauryl thiodipropionate; and phosphite compounds such as tri(mixed mono and dinonyl phenyl)phosphites; phosphite esters of lauryl and stearyl alcohol; di - stearyl - pentaerythritol - diphosphite; bis(2,4 - di - tert - butylphenyl)pentaerythritol diphosphite; and tri - 2,4 - di - tert - butylphenyl phosphite ester.

The preferred primary or hindered phenolic anti-oxidant stabilizers which are employed in the compositions of the present invention are 2,6 - di - tertiary - butyl - paracresol, or butylated hydroxy toluene (BHT); octadecyl - 3 - (3,5 - di - tert - butyl - 4 - hydroxyphenyl)propionate (Irganox 1076); tetra - bis[methylene 3 - (3',5' - di - tert - butyl - 4' - hydroxyphenyl)propionate]methane (Irganox 1010); 2,2' ethylidene bis(4,6 - di - tert - butylphenol) (Isonox 129); or 1,3,5 - tris(4 - tert - butyl - 3 - hydroxy - 2,6 - dimethylbenzyl) - 1,3,5 - triazine - 2,4,6 - (1H,3H,5H) - trione (Cyanox 1790). The preferred secondary stabilizers include dilauryl thiodipropionate (DLTDP); distearyl thiodipropionate (DSTDP); tri(mixed mono and dinonyl phenyl)phosphite (Polygard); di - stearyl - pentaerythritol - diphosphite (Weston 618); tri(2,4 - di - tert - butylphenyl)phosphite (Mark 2112); bis(2,4 - di - tert - butylphenyl)pentaerythritol diphosphite (Weston XP-1532); or tri(nonylphenol)phosphite (Weston 399, TNPP). Irganox, Isonox, Cyanox, Polygard, Mark and Weston are Registered Trade Marks.

The hindered phenolic anti-oxidants may be used individually or in various combinations with one another or the secondary stabilizers in the compositions of the present invention.

Inorganic anti-block compounds

The extrudable compositions of the present invention contain a finely divided, inorganic material for use as an anti-block or release reagent. It has been found that certain finely divided inorganic compounds of a substantially neutral pH do not promote discoloration between the hindered phenolic anti-oxidants and the polyalkylene glycol or oxide or polyalkoxylated compounds used to control gel streaking and pinstriping.

The anti-block compounds are present in quantities that effect anti-block/release properties. Such amounts are from 0.02 to 5%, and preferably from 0.08 to 1% by weight, based on the weight of the film forming composition. The pH of the inorganic anti-block is between 6 and 8, preferably as close to a neutral pH of 7 as possible. The average particle size of the anti-block compounds of this invention are from 0.5 to 10 microns (μm), preferably from 2 to 7 microns (μm) in diameter. The average surface area of the inorganic anti-block compounds of this invention are from 1 to 500 $m^2/g$.

Suitable anti-block compounds according to the present invention are finely divided diatomaceous earth fluxed with sodium phosphate (White Floss); finely divided diatomaceous earth fluxed with sodium

carbonate (Super Floss) which has been neutralized with an acid wash such as dilute phosphoric acid; finely divided calcium carbonate; synthesized and naturally occurring amorphous finely divided silica (Syloid 72, 385, 266 and Imsil A-15); and talcs. White Floss, Super Floss, Syloid and Imsil are Registered Trade Marks.

Masterbatch concentrate

As previously described herein, the hindered phenolic anti-oxidant, inorganic anti-block compound and anti-gel compound of this invention may be admixed with a Ziegler-Natta catalyzed olefin polymer via a masterbatch concentrate to yield the extrudable film forming composition of this invention. The Ziegler-Natta catalyzed olefin polymer typically is admixed with the materbatch concentrate in a letdown ratio of between 5 and 100 to 1 by weight. Preferably, a letdown ratio of between 5 and 30 to 1 by weight is employed.

The masterbatch concentrate is comprised of between 40% and 98% by weight, preferably between 60% and 95% by weight, of an olefin polymer compatible with the Ziegler-Natta catalyzed olefin polymer with which the masterbatch concentrate is admixed. Compatibility of the olefin polymers can be judged by the general quality of the extruded film product in terms of the increased presence of haze, gel-like defects or gross distortions of the surface texture, commonly referred to as an "applesauce" or "sharkskin-like" surface.

The masterbatch concentrate further includes between 0.1% and 5% by weight of a hindered phenolic anti-oxidant; between 0.1% and 5% by weight of the anti-gel compound of this invention; and between 2% and 48%, by weight, preferably between 3% and 20% by weight, of an inorganic anti-block compound of this invention having a substantially neutral pH.

Extrudable compositions

The extrudable compositions of the present invention may be used in any of the forms of such compositions which are commonly employed in the extruded film arts, such as compounds modified with various slip agents such as fatty acid amides and anti-static additives for specific end use applications.

These extrudable compositions are thermoplastic in nature. In addition to the olefin polymer, anti-gel compound, hindered phenolic anti-oxidant, near neutral pH inorganic, anti-block compound, the compositions of the present invention may contain other adjuvant materials which are commonly employed in olefin polymer-based extrudable film compositions. Such other adjuvants include plasticizers, fillers, pigments, lubricants, slip agents, modifiers and similar materials.

The fillers which may be used in the olefin polymer-based extrudable compositions of the present invention are the fillers which are commonly used with such polymers. The fillers are used in amounts which correspond to from 1 to 20 percent by weight, based on the weight of the olefin polymer. Such fillers include materials such as carbon black, titanium dioxide, clays, calcium silicates and others known in the art.

The plasticizers which may be employed in the olefin polymer-based extrudable compositions of the present invention are the plasticizers which are commonly used with such polymers. The plasticizers are used in amounts which would correspond to from 1 to 25 percent by weight based on the weight of olefin polymer. Such plasticizers include materials such as phthalates, phosphates, adipates, azelates, amine based polyols, and a number of other similar products.

Process lubricants which are commonly employed in the olefin polymer-based extrudable compositions are the lubricants which are commonly used with such polymers. The lubricants are used in amounts which correspond to from 0.02 to 2 percent by weight of lubricant agent based on the weight of the olefin polymer. Examples of such lubricants are ethylene bis stearamide; zinc, calcium and/or magnesium stearates; and hydrocarbon waxes suitable organic slip agents include erucamide and oleamide.

Extruding conditions

The extrudable conditions of the present invention are particularly designed for use in equipment utilized for tubular film, cast film and extrusion coating products. Such equipment may have hold-up areas or areas of stagnation that retard the flow of extrudate therethrough, leads to the development of gel streaking and pinstriping in the presence of hindered phenolic anti-oxidants and in the absence of the use of the anti-gel additives of the present invention. In such equipment, the olefin polymer based extrudable compositions are subjected to extrusion temperatures of from 135°C to 340°C, and preferably from 190°C to 340°C, under varying conditions of heat and pressure, and for periods of time of from 0.2 to 10 minutes.

The film is usually prepared in sheets which are from 2.5 µm to 250 µm thick.

According to the present invention, the olefin polymer compositions are not exposed to post-reactor high temperature compounding or finishing which could introduce hydroperoxides into the composition prior to film extrusion. Instead the three aforementioned additives are admixed via a masterbatch concentrate or by directly dry blending the anti-gel and anti-oxidant compounds into the granular olefin polymer with the anti-block compound separately admixed prior to extrusion of the composition. Another advantage of this invention is that gas treatment (e.g., with propylene oxide) after polymerization of the olefin polymer is not required nor are subsequent alcohol washes required to remove the propylene oxide

or ethylene oxide gas products nor the subsequent drying process to remove the alcohol. Also unnecessary is the need for devolatilization of alcohols or water which could be added to neutralize and break down catalyst residue.

The following examples are illustrative of the present invention and are not intended as a limitation of the scope thereof.

Example 1

Preparation of polymer resins

Two low pressure, low density ethylene-butene-1 copolymers were prepared according to the procedure disclosed in South African Patent Publication No. 79-01365, published September 22, 1980, entitled "Process for Making Film From Low Density Ethylene Hydrocarbon Copolymer" by W. A. Fraser et al. The properties of the ethylene-1 butene-1 copolymer were determined by the following methods:

Density was determined according to ASTM D-1501. A plaque was conditioned for one hour at 100°C to approach equilibrium crystallinity. Density is reported as $kg/dm^3$.

Melt Index (MI) was determined according to ASTM D-1238, Condition E. It was measured at 190°C and 303 kPa and reported as grams/10 minutes.

Flow Index (HLMI) was measured according to ASTM D-1238, Condition F. It was measured at 10 times the weight used in the melt index test above and reported as grams per 10 minutes.

Melt Flow Ratio (MFR) was calculated as Flow Index/Melt Index.

Ti, Mg, Al and Si catalyst residues in the ethylene-butene-1 copolymer in ppm was measured by induction coupled plasma emission spectroscopy.

Cl catalyst residue in the ethylene-butene-1 copolymer in ppm was measured by a Dohrmann micro-coulometric titration system.

One of the ethylene-butene-1 copolymers, designated, A, had the following properties: a melt index of 1.0; a MFR of 28; a density of 0.918 $kg/dm^3$; and a catalyst residue in ppm of Ti-2, Mg-2, Al-73, Si-56 and Cl-13.

The other ethylene-butene-1 copolymer, designated B, had the following properties: a melt index of 2.0; a MFR of 28; a density of 0.918 $kg/dm^3$; and a catalyst residue in ppm of Ti-3, Mg-4, Al-89, Si-97 and Cl-16.

Either polymer A or B was used in the polymer compositions of all the subsequent examples herein.

Preparation of polymer compositions

One of two methods to prepare polymer compositions was employed in the examples. In one method, the components were dry blended in a roll drum for 20 minutes at room temperature with a virgin olefin polymer. In the other method, the components were compounded into masterbatch concentrates utilizing a Banbury batch mixer coupled to a Farrel Birmingham single screw extruder melt pump. The components were mixed in the Banbury mixer for 4 to 5 minutes, dropped at 125°C, and extruded through an extruder melt pump using a throat temperature of 104°C, a barrel temperature of 150°C and a die temperature of 150°C. Each materbatch concentrate was admixed with a high pressure, low density ethylene polymer having a melt index of 2.0 and a density of 0.918 $kg/dm^3$ (commercially available under the trade name DFD 4140 from Union Carbide Corporation, Old Ridgebury Road, Danbury, Connecticut 06810). This high pressure, low density polyethylene is designated as Polymer C in Table I. Ten masterbatch concentrates were prepared and their compositions are set forth in Table I below:

TABLE I

| Masterbatch concentrate No. | Composition | Concentration (weight %) |
|---|---|---|
| 1 | Polymer C | 87.0 |
| | Octadecyl 3-(3',5'-di-tert-butyl-4'-hydroxyphenyl)propionate | 0.4 |
| | Polyethylene glycol (molecular weight of 4000) | 1.0 |
| | Finely divided diatomaceous earth fluxed with sodium carbonate, having an average particle size of about 6 µm and a pH of about 10 | 10.0 |
| | Erucamide | 1.6 |
| 2 | Polymer C | 87.0 |
| | Octadecyl 3-(3',5'-di-tert-butyl-4'-hydroxyphenyl)propionate | 0.4 |
| | Polyethylene glycol (molecular weight of 4000) | 1.0 |
| | Synthetic amorphous finely divided silica having a particle size of about 4 µm and a pH of about 6.5 | 10.0 |
| | Erucamide | 1.6 |
| 3 | Polymer C | 86.6 |
| | Octadecyl 3-(3',5'-di-tert-butyl-4'-hydroxyphenyl)propionate | 0.4 |
| | Di-stearyl-pentaerythritol-diphosphite | 0.4 |
| | Polyethylene glycol (molecular weight of 4000) | 1.0 |
| | Finely divided diatomaceous earth fluxed with sodium carbonate, having an average particle size of about 6 µm and a pH of about 10 | 10.0 |
| | Erucamide | 1.6 |
| 4 | Polymer C | 87.0 |
| | Octadecyl 3-(3',5'-di-tert-butyl-4'-hydroxyphenyl)propionate | 0.4 |
| | Polyethylene glycol (molecular weight of 4000) | 1.0 |
| | Finely divided diatomaceous earth fluxed with sodium phosphate, having an average particle size of about 5 µm and a pH of about 7 | 10.0 |
| | Erucamide | 1.6 |

TABLE I (Cont'd)

| Masterbatch concentrate No. | Composition | Concentration (weight %) |
|---|---|---|
| 5 | Polymer C | 87.0 |
| | Octadecyl 3-(3',5'-di-tert-butyl-4'-hydroxyphenyl)propionate | 0.4 |
| | Polyethylene glycol (molecular weight of 4000) | 1.0 |
| | Finely divided calcium carbonate having an average particle size of about 3.2 µm, and having a pH of about 8 | 10.0 |
| | Erucamide | 1.6 |
| 6 | Polymer C | 82.77 |
| | Tetra-bis[methylene 3-3',5'-di-tert-butyl-4'-hydroxyphenyl) propionate]methane | 0.4 |
| | Polyethylene oxide having a molecular weight of 600,000 | 1.0 |
| | Finely divided diatomaceous earth fluxed with sodium carbonate, having an average particle size of about 6 µm and a pH of about 10 | 13.33 |
| | Erucamide | 2.5 |
| 7 | Polymer C | 81.97 |
| | Tetra-bis[methylene 3-3'5'-di-tert-butyl-4'-hydroxyphenyl) propionate]methane | 0.4 |
| | Tri-nonyl-phenyl phosphite ester | 0.8 |
| | Polyethylene oxide having a molecular weight of 600,000 | 1.0 |
| | Finely divided diatomaceous earth fluxed with sodium carbonate, having an average particle size of about 6 µm and a pH of about 10 | 13.33 |
| | Erucamide | 2.5 |
| 8 | Polymer C | 98.6 |
| | Tetra-bis[methylene 3-3',5'-di-tert-butyl-4'-hydroxyphenyl) propionate]methane | 0.4 |
| | Polyethylene oxide having a molecular weight of 600,000 | 1.0 |

TABLE I (Cont'd)

| Masterbatch concentrate No. | Composition | Concentration (weight %) |
|---|---|---|
| 9 | Polymer C | 84.049 |
| | Octadecyl 3-(3',5'-di-tert-butyl-4'-hydroxyphenyl)propionate | 0.025 |
| | Tri-nonyl-phenyl phosphite ester | 0.1 |
| | Finely divided diatomaceous earth fluxed with sodium carbonate, having an average particle size of about 6 µm and a pH of about 10 | 13.33 |
| | Erucamide | 2.5 |
| 10 | Polymer C | 82.77 |
| | Tetra-bis[methylene 3-3',5'-di-tert-butyl-4'-hydroxyphenyl) propionate]methane | 0.4 |
| | Polyethylene oxide having a molecular weight of 600,000 | 1.0 |
| | Finely divided diatomaceous earth fluxed with sodium phosphate, having an average particle size of about 5 µm and a pH of about 7 | 13.33 |
| | Erucamide | 2.5 |

The measurement of pH of the various anti-block compounds used in 9 of the masterbatch concentrates of Table I was done using the following procedure. 20 grams of the inorganic anti-block compound was placed in a 200 ml glass beaker with 100 ml of distilled water. The mixture was magnetically stirred for 30 minutes and then the anti-block compound was allowed to settle from the slurried mixture. The pH of the settled water slurry was measured using litmus paper capable of discerning pH values in the 4 to 12 range.

Example 2

A series of 22 control experiments or runs were conducted to illustrate disadvantages associated with the use of olefin polymer based film extrusion formulations which did not contain one or more of the following: the anti-gel compound or near neutral (6—8) pH anti-block compound of this invention or a hindered phenolic anti-oxidant. Films extruded from the 22 control formulations exhibited blocking or gel streaking/pinstriping or discoloration upon aging in the extruded film or a combination thereof. The 22 control formulations were prepared by one of the methods described hereinabove.

After the control formulations were prepared, films were extruded in a tubular extrusion device for various periods of time to assess gel formation/pinstriping. The extruded films were aged at 60°C for 4 weeks to assess discoloration. For runs 1, 3 and 6—15, the following extrusion conditions were employed: Film was extruded at 0.38 g/s (3 lbs/hr) with a 196°C (385°F) melt temperature using a 25 mm (1-inch) Killion 24 to 1 length to diameter extruder equipped with a 31.8 mm (1 1/4-inch) die with a 7.62 mm (0.30 inch) gap. No nitrogen purge was used on the extrusion hopper. For runs 2 and 16—22, the following extrusion conditions were employed: Film was extruded on a 63.5 mm (2 1/2-inch) diameter 24 to 1 length to diameter Egan extruder equipped with a 0.15 m (6-inch) diameter Sano die having a 2.5 mm (100 ml) die gap. The extrusion rate was about 10.7 g/s (85 lbs/hr) with a melt temperature of about 199°C (390°F).

The extruded films were approximately 38 µm (1.5 mils) thick. During extrusion, the films were examined periodically for gel streak formation and pinstriping. After aging for 4 weeks at 60°C, the films also were examined for discoloration. Table II hereinbelow sets forth the resin control compositions employed and the results obtained with respect to gel streak formation/pinstriping/discoloration. The number symbols used to designate the visual appearance of the film with respect to gel streaking/pinstriping/discoloration have the following meanings:

0—clear of gel streaking/pinstriping/discoloration
1—slight gel streaking/pinstriping/discoloration
2—moderate gel streaking/pinstriping/discoloration
3—severe gel streaking/pinstriping/discoloration

As can be seen from a review of the information disclosed in Table II, runs 1 and 2 were made with additive-free polymer control compositions, which exhibited slight gel streaking/pinstriping and did not discolor upon aging at 60°C for 4 weeks. The additive-free polymer control compositions of runs 1 and 2 do not have long term storage stability or reprocessing stability and lack adequate handling characteristics such as anti-block or non-tack properties.

Runs 3—5 were made with hindered phenolics anti-oxidant established polymer control formulations which exhibited severe gel streaking/pinstriping, but no discoloration in the extruded film upon aging at 60°C for 4 weeks.

Runs 6—15 were made with polymer control formulations containing a hindered phenolic anti-oxidant, various anti-gel compounds, e.g., polyethylene glycols/oxides on an ethoxylated linear alcohol. These polymer control compositions exhibited no gel streaking/pinstriping and slightly discolored upon aging at 60°C for 4 weeks. The control formulations for runs 6—15 lack adequate handling characteristics such as anti-block or non-tack properties.

Runs 16—22 were made with polymer control formulations containing a hindered phenolic anti-oxidant, various anti-gel compounds, e.g., polyethylene glycol or polyethylene oxide, and an inorganic anti-block compound having a pH of about 11. These polymer control formulations did not exhibit gel streaking/pinstriping but became highly discolored after aging 4 weeks at 60°C.

Induced blocking of the films (sample conditioned for 24 hours at 60°C under a 1.0 kPa load) produced with the control formulations used in runs 1—22 was measured. For runs 1—15, which did not contain an anti-block compound, induced blocking values were found to be greater than 200 grams force to separate two film layers. For runs 16—22, which contained between 2.5% and 8% by weight anti-block compound, induced blocking values were found to be less than about 50 grams force to separate two film layers. Induced blocking values below about 50 grams force to separate two film layers are commercially acceptable.

TABLE II

| Run No. | Formulation | Additive concentration (%) | Gel streaking rating | Pinstriping rating | Discoloration rating |
|---|---|---|---|---|---|
| 1 | Polymer A | 0 | 1 | 0 | 0 |
| 2 | Polymer B | 0 | 1 | 0 | 0 |
| 3 | Polymer A<br>Octadecyl 3-(3',5'-di-tert-butyl-4'-hydroxyphenyl) propionate | 0.02 | 3 | 3 | 0 |
| 4 | Polymer B<br>Octadecyl 3-(3',5'-di-tert-butyl-4'-hydroxyphenyl) propionate | 0.02 | 3 | 3 | 0 |
| 5 | Polymer B<br>Tetra-bis[methylene 3-(3',5'-di-tert-butyl-4'-hydroxyphenyl) propionate]methane | 0.02 | 3 | 3 | 0 |
| 6 | Polymer A<br>Tetra-bis[methylene 3-(3',5'-di-tert-butyl-4'-hydroxyphenyl) propionate]methane;<br>Polyethylene glycol (molecular weight of 200) | 0.02<br><br>0.05 | 0 | 0 | 0 |
| 7 | Polymer A<br>Tetra-bis[methylene 3-(3',5'-di-tert-butyl-4'-hydroxyphenyl) propionate]methane;<br>Polyethylene glycol (molecular weight of 4000) | 0.02<br><br>0.05 | 0 | 0 | 0 |

TABLE II (Cont'd)

| Run No. | Formulation | Additive concentration (%) | Gel streaking rating | Pinstriping rating | Discoloration rating |
|---|---|---|---|---|---|
| 8 | Polymer A | | | | |
| | Tetra-bis[methylene 3-(3′,5′-di-tert-butyl-4′-hydroxyphenyl propionate]methane; | 0.02 | 0 | 0 | 1 |
| | Polyethylene oxide (molecular weight of 10,000) | 0.05 | | | |
| 9 | Polymer A | | | | |
| | Tetra-bis[methylene 3-(3′,5′-di-tert-butyl-4′-hydroxyphenyl) propionate]methane; | 0.02 | 0 | 0 | 1 |
| | Polyethylene oxide (molecular weight of 100,000) | 0.05 | | | |
| 10 | Polymer A | | | | |
| | Tetra-bis[methylene 3-(3′,5′-di-tert-butyl-4′-hydroxyphenyl) propionate]methane; | 0.02 | 0 | 0 | 1 |
| | Polyethylene oxide (molecular weight of 600,000) | 0.05 | | | |
| 11 | Polymer A | | | | |
| | Tetra-bis[methylene 3-(3′,5′-di-tert-butyl-4′-hydroxyphenyl) propionate]methane; | 0.02 | 1 | 0 | 1 |
| | Polyethylene oxide (molecular weight of 4,000,000) | 0.05 | | | |
| 12 | Polymer A | | | | |
| | Tetra-bis[methylene 3-(3′,5′-di-tert-butyl-4′-hydroxyphenyl) propionate]methane; | | | | |
| | Reaction product of nonyl phenol with 14 moles ethylene oxide | | 0 | 0 | 1 |
| 13 | Polymer A | | | | |
| | Tetra-bis[methylene 3-(3′,5′-di-tert-butyl-4′-hydroxyphenyl) propionate]methane; | 0.02 | 0 | 0 | 1 |
| | Reaction product of nonyl phenol with 40 moles ethylene oxide | 0.05 | | | |
| 14 | Polymer A | | | | |
| | Tetra-bis[methylene 3-(3′,5′-di-tert-butyl-4′-hydroxyphenyl) propionate]methane; | 0.02 | 0 | 0 | 1 |
| | Reaction product of lauryl alcohol with 40 moles ethylene oxide | 0.05 | | | |
| 15 | Polymer A | | | | |
| | Tetra-bis[methylene 3-(3′,5′-di-tert-butyl-4′-hydroxyphenyl) propionate]methane; | 0.02 | 1 | 2 | 1 |
| | Reaction product of lauryl alcohol with 8 moles ethylene oxide | 0.05 | | | |
| 16 | Polymer B | | | | |
| | Masterbatch Concentrate No. 1 | 5.0 | 0 | 0 | 3 |

TABLE II (Cont'd)

| Run No. | Formulation | Additive concentration (%) | Gel streaking rating | Pinstriping rating | Discoloration rating |
|---|---|---|---|---|---|
| 17 | Polymer B<br>Masterbatch Concentrate No. 3 | 5.0 | 0 | 0 | 3 |
| 18 | Polymer B<br>Masterbatch Concentrate No. 1 | 2.5 | 0 | 0 | 2 |
| 19 | Polymer A<br>Masterbatch Concentrate No. 6 | 8.0 | 0 | 0 | 3 |
| 20 | Polymer A<br>Masterbatch Concentrate No. 6 | 5.0 | 0 | 0 | 3 |
| 21 | Polymer A<br>Masterbatch Concentrate No. 7 | 5.0 | 0 | 0 | 3 |
| 22 | Polymer A<br>Masterbatch Concentrate No. 8<br>Masterbatch Concentrate No. 9 | 2.5<br>2.5 | 0 | 0 | 3 |

Example 3

Example 2 was repeated using a polymer formulation according to the present invention. A series of 5 experiments (runs 23—27) were conducted to demonstrate the effectiveness of the use of the anti-gel and anti-block compounds of this invention in olefin polymer based film extrusion formulations. Films extruded from the 5 formulations were essentially free from the formation of gel streaks/pinstriping/discoloration in the extruded film upon aging. The formulations were prepared by one of the methods described hereinabove. After the formulations were prepared, films were extruded under the same extrusion conditions described hereinabove for runs 2 and 16—22.

Table III hereinbelow sets forth the polymer formulations employed and the results obtained with respect to gel streak formation/pinstriping/discoloration.

As can be seen from a review of the information disclosed in Table III, runs 23 and 26 were made with polymer B and masterbatch concentrates 2, 4 or 5. Films extruded from these formulations were essentially free from gel streaking, pinstriping and discoloration upon aging.

Run 27 was made with polymer A and masterbatch concentrate 10. Film extruded from this formulation was essentially free from gel streaking, pinstriping and discoloration upon aging.

Induced blocking of the films produced with the formulations used in runs 23—27 was measured as previously described herein. For runs 23—27, which contained between 2.5% and 5% by weight near neutral pH anti-block compound of this invention, induced blocking values were found to be less than about 50 grams force to separate two film layers.

TABLE III

| Run No. | Formulation | Additive concentration (%) | Gel streaking rating | Pinstriping rating | Discoloration rating |
|---|---|---|---|---|---|
| 23 | Polymer B<br>Masterbatch Concentrate No. 2 | 5.0 | 0 | 0 | 1 |
| 24 | Polymer B<br>Masterbatch Concentrate No. 4 | 5.0 | 0 | 0 | 0 |
| 25 | Polymer B<br>Masterbatch Concentrate No. 5 | 5.0 | 0 | 0 | 0 |
| 26 | Polymer B<br>Masterbatch Concentrate No. 4 | 2.5 | 0 | 0 | 0 |
| 27 | Polymer A<br>Masterbatch Concentrate No. 10 | 5.0 | 0 | 0 | 0 |

**Claims**

1. An extrudable film-forming composition which when extruded forms a film which is essentially devoid of gel streaking and pinstriping and which does not discolor upon aging at 60°C for 4 weeks, the film-forming composition being comprised of a Ziegler-Natta catalyzed olefin homopolymer or interpolymer containing a chloride catalyst residue of magnesium, titanium or aluminium in a concentration between 5 and 500 ppm, at least one hindered phenolic anti-oxidant, at least one inorganic anti-block compound and at least one anti-gel compound, the hindered phenolic anti-oxidant being present in a concentration between 20 and 5000 ppm, the inorganic anti-block compound being present in a concentration between 0.02 and 5% by weight, the anti-gel compound having at least 5 repeat units of an alkylene oxide and being present in a concentration sufficient to neutralize the chloride catalyst residue, the concentration of the anti-gel compound being at least 0.8 times the concentration of the hindered phenolic anti-oxidant, and the anti-gel compound having a molecular weight between $3.32\times10^{-25}$ and $6.64\times10^{-21}$ kg (200 and 4,000,000 Daltons), characterised in that the inorganic anti-block compound has a pH of between 6 and 8.

2. A composition as claimed in claim 1 wherein the anti-gel compound is represented by the following structural formula:

$$R—(A—R_1)_n,$$

wherein

n is 1 or 2;

R is a hydroxy group; a $C_1$—$C_{24}$ hydroxy alkyl group; a $C_1$—$C_{12}$ alkylated phenol group; a $C_{12}$—$C_{24}$ alkyl or alkylene amine group; or a $C_{12}$—$C_{24}$ alkyl or alkylene amide group;

$R_1$ is a hydrogen atom or lower alkyl group;

A is $-\!(R_2O)\!-_x$ or

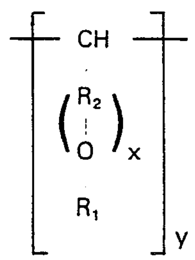

wherein

$R_2$ is an ethylene or propylene group, or mixtures thereof;

x is a number between 5 and 20,000;

y is a number between 2 and 6; and

$R_1$ is as defined herein.

3. A composition as claimed in claim 2 wherein the anti-gel compound comprises:

a polyalkylene glycol having a molecular weight between $3.32\times10^{-25}$ and $3.32\times10^{-23}$ kg (200 and 20,000 Daltons) or a polyalkylene oxide having a molecular weight between $3.32\times10^{-23}$ and $6.64\times10^{-21}$ kg (20,000 and 4,000,000 Daltons).

4. A composition as claimed in claim 2 wherein the anti-gel compound comprises:

the reaction product of either an alkanol or an alkyl phenol with more than 5 moles of an alkylene oxide.

5. A composition as claimed in claim 3 wherein the polyalkylene glycol is polyethylene glycol.

6. A composition as claimed in claim 2 wherein the polyalkylene oxide is polyethylene oxide, polypropylene oxide or an interpolymer thereof.

7. A composition as claimed in claim 4 wherein the anti-gel compound is an ethylene or propylene oxide adduct of a lauryl alcohol, myristyl alcohol, behenyl alcohol, oleyl alcohol or erucyl alcohol, or an adduct of mixtures of the oxides and the alcohols.

8. A composition as claimed in claim 4 wherein the alkyl phenol is methyl, ethyl, propyl, butyl, pentyl, hexyl, heptyl, octyl, nonyl, decyl, undecyl, or dodecyl phenol or mixtures thereof, and the alkylene oxide is ethylene oxide, propylene oxide or mixtures thereof.

9. A composition as claimed in claim 2 wherein the anti-gel compound comprises the reaction product of either (a) a $C_{12}$—$C_{24}$ alkyl or alkylene amine or amide or (b) a polyol or monoalkyl-substituted polyol with more than 5 moles of an alkylene oxide.

10. A composition as claimed in claim 9 wherein the alkyl amine or amide is lauryl, myristyl, palmytyl, stearyl, arachidyl or behenyl amine or amide, respectively, and the alkylene oxide is ethylene oxide, propylene oxide or mixtures thereof.

11. A composition as claimed in claim 9 wherein the alkylene amine or amide is oleyl or erucyl amine or amide, respectively, or mixtures thereof, and the alkylene oxide is ethylene oxide, propylene oxide or mixtures thereof.

12. A composition as claimed in claim 9 wherein the polyol is glycerol, mannitol or sorbitol and the alkylene oxide is ethylene oxide, propylene oxide or mixtures thereof.

13. A composition as claimed in any one of the preceding claims wherein the inorganic anti-block compound comprises finely divided diatomaceous earth fluxed with sodium phosphate; finely divided diatomaceous earth fluxed with sodium carbonate which has been neutralized with an acid wash; finely divided calcium carbonate; synthesized or naturally occurring amorphous finely divided silica; or a talc.

14. A composition as claimed in any one of the preceding claims wherein the anti-gel compound is characterized by having at least 10 repeat units of an alkylene oxide.

15. A composition as claimed in any one of the preceding claims wherein the olefin homopolymer is an ethylene polymer, the chloride catalyst residue concentration is between 5 and 50 ppm, and the concentration of the anti-gel compound is between 25 and 10,000 ppm.

16. A composition as claimed in any one of Claims 1 to 14 wherein the olefin homopolymer is a propylene polymer or a butene polymer, the chloride catalyst residue concentration is between 10 and 500 ppm, the hindered phenolic anti-oxidant concentration is between 200 and 5000 ppm, and the concentration of the anti-gel compound is between 200 and 10,000 ppm.

17. A composition as claimed in any one of the preceding claims wherein the anti-gel compound is present in an amount at least 5 times the amount of chloride catalyst residue present.

18. A composition as claimed in Claim 17 wherein the anti-gel compound to chloride catalyst residue ratio is greater than 10 to 1.

19. A composition as claimed in any one of claims 1 to 14 wherein the olefin interpolymer is an ethylene/propylene copolymer, ethylene/butene-1 copolymer, ethylene/pentene-1 copolymer, ethylene/4-methyl-pentene-1 copolymer, ethylene/hexene-1 copolymer, or ethylene/octene-1 copolymer.

20. A composition as claimed in any one of claims 1 to 14 wherein the olefin interpolymer is an ethylene interpolymer which includes two or more of the following monomers: propylene, butene-1, pentene-1, hexene-1, 4-methylpentene-1 and octene-1.

21. A composition as claimed in any one of claims 1 to 14 wherein the olefin interpolymer is a propylene interpolymer which includes two or more of the following monomers: ethylene, butene-1, pentene-1, hexene-1, 4-methyl-pentene-1 and octene-1.

22. A composition as claimed in any one of claims 1 to 14 wherein the olefin interpolymer is a butene-1 interpolymer which includes two or more of the following monomers: ethylene, propylene, pentene-1, hexene-1, 4-methyl-pentene-1 and octene-1.

23. A composition as claimed in any one of the preceding claims further including an organic slip agent.

24. A composition as claimed in Claim 23 wherein the organic slip agent is erucamide or oleamide.

25. A masterbatch concentrate which, when admixed with a Ziegler-Natta catalyzed olefin homopolymer or interpolymer in a letdown ratio of between 5 and 100 to 1 by weight of the catalyzed olefin homopolymer or interpolymer to the masterbatch concentrate, provides a film-forming composition capable of being extruded into a film which is essentially free from gel streaking and pinstriping and which does not discolor upon aging at 60°C for 4 weeks, wherein the masterbatch concentrate comprises: between 40% and 98% by weight of an olefin homopolymer or interpolymer compatible with the Ziegler-Natta catalyzed olefin homopolymer or interpolymer; between 0.1% and 5% by weight of a hindered phenolic anti-oxidant; between 0.1% and 5% by weight of an anti-gel compound having at least 5 repeat units of an alkylene oxide and also having a molecular weight between $3.32\times10^{-25}$ and $6.64\times10^{-21}$ kg (200 and 4,000,000 Daltons); and between 2% and 48% by weight of an inorganic anti-block compound, characterized in that the inorganic anti-block compound has a pH of between 6 and 8.

26. A concentrate as claimed in Claim 25 wherein the concentration of the olefin homopolymer or interpolymer is between 60% and 95% by weight and the concentration of the inorganic anti-block compound is between 3% and 20% by weight.

27. A concentrate as claimed in Claim 25 or Claim 26 when further characterized by any one of the features of Claims 2 to 14 and 19 to 24.

28. A process for extruding a film-forming olefin polymer based composition into film which is essentially free from gel streaking and pinstriping and which does not discolor upon aging at 60°C for 4 weeks, characterised in that the composition comprises an extrudable film-forming composition as claimed in any one of Claims 1 to 24.

29. A process as claimed in Claim 28 characterised in that the extrusion temperature is at least 135°C to 345°C and that the throughput time for the olefin polymer based composition in the extruding equipment is from 0.2 to 10 minutes.

**Patentansprüche**

1. Strangpreßbare, filmbildende Zusammensetzung, die nach dem Strangpressen einen von Gelschlieren und Nadelstreifen praktisch freien Film bildet, der sich nach 4-wöchigem Altern bei 60°C nicht verfärbt, die aus einem Ziegler-Natta-katalysierten Olefinhomopolymer oder -interpolymer, das einen Chloridkatalysatorrückstand von Magnesium, Titan oder Aluminium in einer Konzentration zwischen 5 und 500 ppm enthält, mindestens einem gehinderten phenolischen Antioxidationsmittel, mindestens einer

anorganischen Antiblockverbindung und mindestens einer Antigelverbindung besteht, wobei das gehinderte phenolische Antioxidationsmittel in einer Konzentration zwischen 20 und 5000 ppm anwesend ist, die anorganische Antiblockverbindung in einer Konzentration zwischen 0,02 und 5 Gew.-% anwesend ist, die Antigelverbindung mindestens 5 wiederkehrende Einheiten eines Alkylenoxids aufweist und in einer zur Neutralisation des Chloridkatalysatorrückstandes ausreichenden Konzentration anwesend ist, die Konzentration der Antigelverbindung mindestens das 0,8-fache der Konzentration des gehinderten phenolischen Antioxidationsmittels beträgt und die Antigelverbindung ein Molekulargewicht zwischen $3{,}32\times10^{-25}$ und $6{,}64\times10^{-21}$ kg (200 und 4 000 000 Dalton) hat, dadurch gekennzeichnet, daß die anorganische Antiblockverbindung einen pH zwischen 6 und 8 hat.

2. Zusammensetzung nach Anspruch 1, in welcher die Antigelverbindung durch die folgende Strukturformel dargestellt wird

$$R—(A—R_1)_n$$

worin n 1 oder 2 ist,

R eine Hydroxygruppe, eine $C_1$—$C_{24}$ Hydroxyalkylgruppe, eine $C_1$—$C_{12}$ alkylierte Phenolgruppe, eine $C_{12}$—$C_{24}$ Alkyl- oder Alkylenamingruppe oder eine $C_{12}$—$C_{24}$ Alkyl- oder Alkylenamidgruppe ist;

$R_1$ ein Wasserstoffatom oder eine niedrige Alkylgruppe ist;

A $-\!(R_2O)\!-_x$ oder

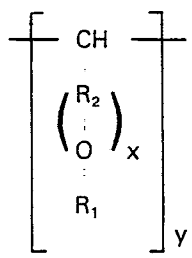

ist, worin

$R_2$ eine Ethylen- oder Propylengruppe oder Mischungen derselben ist,

x eine Zahl zwischen 5 und 20 000 ist,

y eine Zahl zwischen 2 und 6 ist, und

$R_1$ wie hier definiert ist.

3. Zusammensetzung nach Anspruch 2, in welcher die Antigelverbindung ein Polyalkylenglykol mit einem Molekulargewicht zwischen $3{,}32\times10^{-25}$ und $3{,}32\times10^{-23}$ kg (200 und 20 000 Dalton) oder ein Polyalkylenoxid mit einem Molekulargewicht zwischen $3{,}32\times10^{-23}$ und $6{,}64\times10^{-21}$ kg (20 000 und 4 000 000 Dalton) umfaßt.

4. Zusammensetzung nach Anspruch 2, in welcher die Antigelverbindung das Reaktionsprodukt eines Alkanols oder eines Alkylphenols mit mehr als 5 Mol eines Alkylenoxids umfaßt.

5. Zusammensetzung nach Anspruch 3, in welcher das Polyalkylenglykol Polyethylenglykol ist.

6. Zusammensetzung nach Anspruch 2, in welcher das Polyalkylenoxid Polyethylenoxid, Polypropylenoxid oder ein Interpolymer derselben ist.

7. Zusammensetzung nach Anspruch 4, in welcher die Antigelverbindung ein Ethylen- oder Propylenoxid-Addukt eines Laurylalkohols, Myristylalkohols, Behenylalkohols, Oleylalkohols oder Erucylalkohols oder ein Addukt von Mischungen der Oxide und der Alkohole ist.

8. Zusammensetzung nach Anspruch 4, in welcher das Alkylphenol Methyl-, Ethyl-, Propyl-, Butyl-, Pentyl-, Hexyl-, Heptyl-, Octyl-, Nonyl-, Decyl-, Undecyl- oder Dodecylphenol oder Mischungen derselben und das Alkylenoxid Ethylenoxid, Propylenoxid oder Mischungen derselben ist.

9. Zusammensetzung nach Anspruch 2, in welcher die Antigelverbindung das Reaktionsprodukt (a) eines $C_{12}$—$C_{24}$ Alkyl- oder Alkylenamins oder -amids oder (b) eines Polyols oder monoalkylsubstituierten Polyols mit mehr als 5 Mol eines Alkylenoxids umfaßt.

10. Zusammensetzung nach Anspruch 9, in welcher das Alkylamin oder -amid Lauryl-, Myristyl-, Palmityl-, Stearyl-, Arachidyl- oder Behenylamin bzw. -amid und das Alkylenoxid Ethylenoxid, Propylenoxid oder Mischungen derselben ist.

11. Zusammensetzung nach Anspruch 9, in welcher das Alkylenamin oder -amid Oleyl- oder Erucylamin bzw. -amid oder Mischungen derselben und das Alkylenoxid Ethylenoxid, Propylenoxid oder Mischungen derselben ist.

12. Zusammensetzung nach Anspruch 9, in welcher das Polyol Glycerin, Mannit oder Sorbit und das Alkylenoxid Ethylenoxid, Propylenoxid oder Mischungen derselben ist.

13. Zusammensetzung nach einem der vorhergehenden Ansprüche, in welcher die anorganische Antiblockverbindung feinteilige, mit Natriumphosphat plastifizierte Diatomeenerde, feinteilige, mit Natriumcarbonat, das mittels einer Säurewäsche neutralisiert worden ist, plastifizierte Diatomeenerde,

feinteiliges Calciumcarbonat, synthetisierte oder natürlich vorkommende, feinteilige Kieselsäure oder ein Talkum umfaßt.

14. Zusammensetzung nach einem der vorhergehenden Ansprüche, in welcher die Antigelverbindung durch mindestens 10 wiederkehrende Einheiten eines Alkylenoxids gekennzeichnet ist.

15. Zusammensetzung nach einem der vorhergehenden Ansprüche, in welcher das Olefinhomopolymer ein Ethylenpolymer ist, die Konzentration des Chloridkatalysatorrückstandes zwischen 5 und 50 ppm liegt und die Konzentration der Antigelverbindung zwischen 25 und 10 000 ppm liegt.

16. Zusammensetzung nach einem der Ansprüche 1 bis 14, in welcher das Olefinhomopolymer ein Propylenpolymer oder ein Butenpolymer ist, die Konzentration des Chloridkatalysatorrückstandes zwischen 10 und 500 ppm liegt, die Konzentration des gehinderten phenolischen Antioxidationsmittels zwischen 200 und 5000 ppm ist und die Konzentration der Antigelverbindung zwischen 200 und 10 000 ppm liegt.

17. Zusammensetzung nach einem der vorhergehenden Ansprüche, in welcher die Antigelverbindung in der mindestens 5-fachen Menge des anwesenden Chloridkatalysatorrückstandes anwesend ist.

18. Zusammensetzung nach Anspruch 17, in welcher das Verhältnis der Antigelverbindung zu Chloridkatalysatorrückstand größer als 10 zu 1 ist.

19. Zusammensetzung nach einem der Ansprüche 1 bis 14, in welcher das Olefiniterpolymer ein Ethylen/Propylen-Copolymer, Ethylen/Buten-1-Copolymer, Ethylen/Penten-1-Copolymer, Ethylen/4-Methyl-penten-1-Copolymer, Ethylen/Hexen-1-Copolymer oder Ethylen/Octen-1-Copolymer ist.

20. Zusammensetzung nach einem der Ansprüche 1 bis 14, in welcher das Olefininterpolymer ein Ethyleninterpolymer ist, das zwei oder mehr der folgenden Monomeren: Propylen, Buten-1, Penten-1, Hexen-1, 4-Methyl-penten-1 und Octen-1 umfaßt.

21. Zusammensetzung nach einem der Ansprüche 1 bis 14, in welcher das Olefininterpolymer ein Propyleninterpolymer ist, das zwei oder mehr der folgenden Monomeren: Ethylen, Buten-1, Penten-1, Hexen-1, 4-Methyl-penten-1 und Octen-1 umfaßt.

22. Zusammensetzung nach einem der Ansprüche 1 bis 14, in welcher das Olefininterpolymer ein Buten-1-Interpolymer ist, das zwei oder mehr der folgenden Monomeren: Ethylen, Propylen, Penten-1, Hexen-1, 4-Methyl-penten-1 und Octen-1 umfaßt.

23. Zusammensetzung nach einem der vorhergehenden Ansprüche, die weiterhin ein organisches Gleitmittel umfaßt.

24. Zusammensetzung nach Anspruch 23, in welcher das organische Gleitmittel Erucamid oder Oleamid ist.

25. Grundmischungs-Konzentrat, das nach Mischen mit einem Ziegler-Natta-katalysierten Olefinhomopolymer oder -interpolymer in einem Gewichtsverhältnis zwischen 5 und 100 zu 1 des katalysierten Olefinhomopolymers oder -interpolymers zum Grundmischungs-Konzentrat eine filmbildende Zusammensetzung liefert, die zu einem von Gelschlieren und Nadelstreifen praktisch freien Film, der sich nach 4-wöchiger Alterung bei 60°C nicht verfärbt, stranggepreßt werden kann, worin das Grundmischungs-Konzentrat zwischen 40 und 98 Gew.-% eines Olefinhomopolymers oder -interpolymers, das mit dem Ziegler-Natta-Katalysierten Olefinhomopolymer oder -interpolymer verträglich ist, zwischen 0,1 und 5 Gew.-% eines gehinderten phenolischen Antioxidationsmittels, zwischen 0,1 und 5 Gew.-% einer Antigelverbindung mit mindestens 5 wiederkehrenden Einheiten eines Alkylenoxids und mit einem Molekulargewicht zwischen $3{,}32\times10^{-25}$ und $6{,}64\times10^{-21}$ kg (200 und 4 000 000 Dalton) und zwischen 2 und 48 Gew.-% einer anorganischen Antiblockverbindung umfaßt, dadurch gekennzeichnet, daß die anorganische Antiblockverbindung einen pH zwischen 6 und 8 hat.

26. Konzentrat nach Anspruch 25, in welchem die Konzentration des Olefinhomopolymers oder -interpolymers zwischen 60 und 95 Gew.-% und die Konzentration der anorganischen Antiblockverbindung zwischen 3 und 20 Gew.-% beträgt.

27. Konzentrat nach Anspruch 25 oder 26, wenn es ferner durch eines der Merkmale der Ansprüche 2 bis 14 und 19 bis 24 gekennzeichnet ist.

28. Verfahren zum Strangpressen einer Zusammensetzung auf der Basis eines filmbildendes Olefinpolymers zu einem Film, der praktisch von Gelschlieren und Nadelstreifen frei ist und sich nach 4-wöchigem Altern bei 60°C nicht verfärbt, dadurch gekennzeichnet, daß die Zusammensetzung eine strangpreßbare, filmbildende Zusammensetzung nach einem der Ansprüche 1 bis 24 umfaßt.

29. Verfahren nach Anspruch 28, dadurch gekennzeichnet, daß die Strangpreßtemperatur mindestens 135 bis 345°C beträgt und die Durchsatzzeit für die Zusammensetzung auf Olefinpolymerbasis in der Strangpreßvorrichtung von 0,2 bis 10 min beträgt.

**Revendications**

1. Composition filmogène extrudable qui, à l'état extrudé, forme un film qui est essentiellement dépourvu de stries de gel et de rayures et qui ne change pas de couleur au cours d'un vieillissement à 60°C pendant 4 semaines, la composition filmogène étant formée d'un homopolymère ou interpolymère d'oléfine obtenu par le procédé catalytique de Ziegler-Natta, contenant un résidu de magnésium, de titane ou d'aluminium venant du catalyseur au chlorure à une concentration comprise entre 5 et 500 ppm, au moins un anti-oxydant phénolique à encombrement stérique, au moins un composé inorganique

anti-blocking et au moins un composé anti-gélification, l'anti-oxydant phénolique à encombrement stérique étant présent à une concentration comprise entre 20 et 5000 ppm, le composé inorganique anti-blocking étant présent à une concentration comprise entre 0,02 et 5% en poids et le composé anti-gélification ayant au moins 5 motifs répétés d'un oxyde d'alkylène et étant présent à une concentration suffisante pour neutraliser le résidu de catalyseur au chlorure, la concentration du composé anti-gélification étant égale à au moins 0,8 fois la concentration de l'anti-oxydant phénolique à encombrement stérique et le composé anti-gélification ayant un poids moléculaire compris entre $3,32 \times 10^{-25}$ et $6,64 \times 10^{-21}$ kg (200 et 4 000 000 daltons), caractérisée en ce que le composé inorganique anti-blocking a un pH compris entre 6 et 8.

2. Composition suivant la revendication 1, dans laquelle le composé anti-gélification est représenté par la formule structurale suivante:

$$R—(A—R_1)_n,$$

dans laquelle

n a la valeur 1 ou 2;

R est un groupe hydroxy; un groupe hydroxyalkyle en $C_1$ à $C_{24}$; un groupe phénol ($C_1$—$C_{12}$) alkylé; un groupe alkylamine ou alkylène-amine en $C_{12}$ à $C_{24}$; ou un groupe alkylamide ou alkylène-amide en $C_{12}$ à $C_{24}$;

$R_1$ est un atome d'hydrogène ou un groupe alkyle inférieur;

A est un groupe $-\!(R_2O)\!-_x$ ou

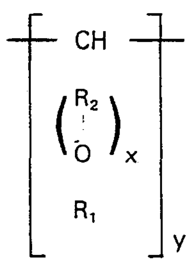

dans lequel

$R_2$ est un groupe éthylène ou un groupe propylène ou des mélanges de ces groupes;

x est un nombre compris entre 5 et 20 000;

y est un nombre compris entre 2 et 6; et

$R_1$ a la définition donnée ci-dessus.

3. Composition suivant la revendication 2, dans laquelle le composé anti-gélification comprend: un polyalkylèneglycol ayant un poids moléculaire compris entre $3,32 \times 10^{-25}$ et $3,32 \times 10^{-23}$ kg (200 et 20 000 daltons) ou un polyalkylène-oxyde ayant un poids moléculaire compris entre $3,32 \times 10^{-23}$ et $6,64 \times 10^{-21}$ kg (20 000 et 4 000 000 daltons).

4. Composition suivant la revendication 2, dans laquelle le composé anti-gélification comprend: le produit de réaction d'un alcanol ou d'un alkylphénol avec plus de 5 moles d'un oxyde d'alkylène.

5. Composition suivant la revendication 3, dans laquelle le polyalkylèneglycol est le polyéthylèneglycol.

6. Composition suivant la revendication 2, dans laquelle le polyalkylène-oxyde est un polyéthylène-oxyde, un polypropylène-oxyde ou un interpolymère de ces composés.

7. Composition suivant la revendication 4, dans laquelle le composé anti-gélification est un produit d'addition d'oxyde d'éthylène ou d'oxyde de propylène d'un alcool laurylique, d'un alcool myristylique, d'un alcool béhénylique, d'un alcool oléylique ou d'un alcool érucylique ou un produit d'addition de mélanges des oxydes et des alcools.

8. Composition suivant la revendication 4, dans laquelle l'alkylphénol est le méthylphénol, l'éthylphénol, le propylphénol, le butylphénol, le pentylphénol, l'hexylphénol, l'heptylphénol, l'octylphénol, le nonylphénol, le décylphénol, l'undécylphénol ou le dodécylphénol ou des mélanges de ces phénols, et l'oxyde d'alkylène est l'oxyde d'éthylène, l'oxyde de propylène ou des mélanges de ces oxydes.

9. Composition suivant la revendication 2, dans laquelle le composé anti-gélification comprend le produit de réaction (a) d'une alkyl- ou alkylènamine ou d'un alkyl- ou alkylènamide en $C_{12}$ à $C_{24}$ ou (b) d'un polyol ou d'un polyol portant un seul substituant alkyle, avec plus de 5 moles d'un oxyde d'alkylène.

10. Composition suivant la revendication 9, dans laquelle l'alkylamine ou l'alkylamide est respectivement l'amine ou l'amide laurylique, myristylique, palmitylique, stéarylique, arachidylique ou béhénylique et l'oxyde d'alkylène est l'oxyde d'éthylène, l'oxyde de propylène ou des mélanges de ces oxydes.

11. Composition suivant la revendication 9, dans laquelle l'alkylènamine ou l'alkylènamide est respectivement l'amine ou l'amide oléylique ou érucylique ou leurs mélanges, et l'oxyde d'alkylène est l'oxyde d'éthylène, l'oxyde de propylène ou des mélanges de ces oxydes.

12. Composition suivant la revendication 9, dans laquelle le polyol est le glycérol, le mannitol ou le sorbitol et l'oxyde d'alkylène est l'oxyde d'éthylène, l'oxyde de propylène ou des mélanges de ces oxydes.

13. Composition suivant l'une quelconque des revendications précédentes, dans laquelle le composé inorganique anti-blocking comprend de la terre de diatomées finement divisée fluxée au phosphate de sodium; de la terre de diatomées finement divisée fluxée au carbonate de sodium qui a été neutralisée par un lavage acide; du carbonate de calcium finement divisé; de la silice amorphe finement divisée synthétisée ou naturelle; ou un talc.

14. Composition suivant l'une quelconque des revendications précédentes, dans laquelle le composé anti-gélification est caractérisé en ce qu'il comprend au moins 10 motifs répétés d'un oxyde d'alkylène.

15. Composition suivant l'une quelconque des revendications précédentes, dans laquelle l'homopolymère oléfinique est un polymère d'éthylène, la concentration du résidu de catalyseur au chlorure est comprise entre 5 et 50 ppm et la concentration du composé anti-gélification est comprise entre 25 et 10 000 ppm.

16. Composition suivant l'une quelconque des revendications 1 à 14, dans laquelle l'homopolymère oléfinique est un polymère de propylène ou un polymère de butène, la concentration du résidu de catalyseur au chlorure est comprise entre 10 et 500 ppm, la concentration de l'anti-oxydant phénolique à encombrement stérique est comprise entre 200 et 5000 ppm, et la concentration du composé anti-gélification est comprise entre 200 et 10 000 ppm.

17. Composition suivant l'une quelconque des revendications précédentes, dans laquelle le composé anti-gélification est présent en une quantité d'au moins 5 fois la quantité présente de résidu de catalyseur au chlorure.

18. Composition suivant la revendication 17, dans laquelle le rapport du composé anti-gélification au résidu de catalyseur au chlorure est supérieur à 10:1.

19. Composition suivant l'une quelconque des revendications 1 à 14, dans laquelle l'interpolymère oléfinique est un copolymère éthylène/propylène, un copolymère éthylène/butène-1, un copolymère éthylène/pentène-1, un copolymère éthylène/4-méthylpentène-1, un copolymère éthylène/hexène-1 ou un copolymère éthylène/octène-1.

20. Composition suivant l'une quelconque des revendications 1 à 14, dans laquelle l'interpolymère oléfinique est un interpolymère d'éthylène qui comprend deux ou plus de deux des monomères suivants: propylène, butène-1, pentène-1, hexène-1, 4-méthylpentène-1 et octène-1.

21. Composition suivant l'une quelconque des revendications 1 à 14, dans laquelle l'interpolymère oléfinique est un interpolymère de propylène qui renferme deux ou plus de deux des monomères suivants: éthylène, butène-1, pentène-1, hexène-1, 4-méthylpentène-1 et octène-1.

22. Composition suivant l'une quelconque des revendications 1 à 14, dans laquelle l'interpolymère oléfinique est un interpolymère de butène-1 qui renferme deux ou plus de deux des monomères suivants: éthylène, propylène, pentène-1, hexène-1, 4-méthylpentène-1 et octène-1.

23. Composition suivant l'une quelconque des revendications précédentes, qui renferme en outre un agent organique de glissement.

24. Composition suivant la revendication 23, dans laquelle l'agent organique de glissement est l'érucamide ou l'oléamide.

25. Concentré de mélange-maître qui, en mélange avec un homopolymère ou un interpolymère oléfinique obtenu par catalyse de Ziegler-Natta dans un rapport en poids de l'homopolymère ou de l'interpolymère oléfinique catalysé au concentré de mélange-maître compris entre 5 et 100:1, produit une composition filmogène capable d'être extrudée en un film qui est essentiellement dépourvu de stries de gel et de rayures et qui ne change pas de couleur au cours d'un vieillissement à 60°C pendant 4 semaines, le concentré de mélange-maître comprenant: entre 40 et 98% en poids d'un homopolymère ou interpolymère oléfinique compatible avec l'homopolymère ou l'interpolymère oléfinique obtenu par catalyse de Ziegler-Natta; entre 0,1 et 5% en poids d'un anti-oxydant phénolique à encombrement stérique; entre 0,1 et 5% en poids d'un composé anti-gélification ayant au moins 5 motifs répétés d'un oxyde d'alkylène et ayant également un poids moléculaire compris entre $3{,}32\times10^{-25}$ et $6{,}64\times10^{-21}$ kg (200 et 4 000 000 daltons), et entre 2 et 48% en poids d'un composé inorganique anti-blocking, caractérisé en ce que le composé inorganique anti-blocking a un pH compris entre 6 et 8.

26. Concentré suivant la revendication 25, dans lequel la concentration de l'homopolymère ou de l'interpolymère oléfinique est comprise entre 60 et 95% en poids et la concentration du composé inorganique anti-blocking est comprise entre 3 et 20% en poids.

27. Concentré suivant la revendication 25 ou 26, caractérisé en outre par l'une des particularités des revendications 2 à 14 et 19 à 24.

28. Procédé d'extrusion d'une composition à base d'un polymère oléfinique filmogène en un film qui est essentiellement dépourvu de stries de gel et de rayures et qui ne change pas de couleur au cours d'un vieillissement à 60°C pendant 4 semaines, caractérisé en ce que la composition comprend une composition filmogène extrudable telle que revendiquée dans l'une quelconque des revendications 1 à 24.

29. Procédé suivant la revendication 28, caractérisé en ce que la température d'extrusion est d'au moins 135 à 345°C et en ce que le temps de passage de la composition à base de polymère oléfinique dans l'appareillage d'extrusion est de 0,2 à 10 minutes.